(19) Europäisches Patentamt

European Patent Office

Office européen des brevets

(11) Publication number : **0 043 714
B1**

(12) **EUROPEAN PATENT SPECIFICATION**

(45) Date of publication of patent specification :
21.03.84

(21) Application number : **81303045.9**

(22) Date of filing : **03.07.81**

(51) Int. Cl.³ : **E 04 F 15/16**

(54) **Method of bonding floorcoverings.**

(30) Priority : **05.07.80 GB 8022099**

(43) Date of publication of application :
**13.01.82 Bulletin 82/02**

(45) Publication of the grant of the patent :
**21.03.84 Bulletin 84/12**

(84) Designated contracting states :
**AT BE CH DE FR IT LI LU NL SE**

(56) References cited :
**CH-A- 441 700
DE-A- 2 718 443
FR-A- 2 300 191
US-A- 3 788 941**

(73) Proprietor : **F. BALL & CO. LIMITED.
632/640 Garratt Lane
London, SW17 ONT. (GB)**

(72) Inventor : **Ball, Ernest James
Bonnington House 37 Mulgrave Road
Sutton Surrey (GB)**

(74) Representative : **Ranson, Arthur Terence et al
W.P. Thompson & Co. Coopers Building Church Street
Liverpool L1 3AB (GB)**

Jouve, 18, rue St-Denis, 75001 Paris, France

Method of bonding floorcoverings

The present invention relates to a method of bonding a floorcovering to a floor on which it is laid.

A common form of textile floorcovering is carpet e. g. foam back carpet having a backing of rubber, P.V.C. or polyurethane, and needle-punched or fibre bonded carpet ; or textile floorcoverings with or without flexible backings ; and in commercial and even in domestic applications, the floorcovering may be bonded to the floor on which it is laid. This is also the case with floorcoverings such as textile backed and so-called cushion vinyls. The floor may be one of concrete or sand cement screed, timber, a smoothing underlayment, e. g. a sand/cement polymer composition, chipboard, hardboard or plywood ; or of materials such as thermoplastic tiles, vinyl sheet and tiles, linoleum, quarry tiles, polyester and epoxy resins, polyurethanes, marble, steel, terrazzo, asphalt and magnesite.

If the floorcovering is bonded to the floor surface by conventional methods with recommended flooring adhesives, considerable difficulty arises in removing the floorcovering. For instance, a rubber foam backed carpet tends to leave a residue of foam and adhesive on the floor surface. DE-A-2718443 describes a floor covering, a method of manufacturing a floor covering and a method of detaching the floor covering from a floor. In this specification the intermediated layer comprises a woven fabric which is secured to a floor surface by a first adhesive layer. The woven fabric has small openings through which the adhesive is able to penetrate. A second layer of adhesive is subsequently applied over the woven fabric so that the first and second adhesive layers are bonded to one another. A floor covering is applied over the second adhesive layer. The woven fabric does not adhere particularly well to the first adhesive layer so that only the bridges of adhesive extending through the openings have to be broken to enable the floor covering to be removed.

US-A-3788941 describes a removable floor and/or wall surface covering having an intermediate layer which is secured by adhesive to a floor surface. The intermediate layer is coated with a release agent to enable a floor covering secured thereto by a layer of adhesive to be removed from the intermediate layer.

It is an object of the present invention to provide a method of bonding a floorcovering to a floor surface, such as to facilitate subsequent removal of the floorcovering.

The present invention uses an intermediate layer adhered both to the floor and to the floorcovering. The intermediate layer is a flexible laminate comprising a flexible continuous surface layer (e. g. paper) to which the floorcovering is adhered, and a flexible reticulate material or mesh to be adhered to the floor surface. Conveniently, the flexible laminate may be provided in rolls of suitable widths.

In removing a floorcovering using the intermediate layer, a portion of the mesh and the floorcovering at the periphery thereof is grasped and pulled to peel off the intermediate layer either from the floor surface together with the flooring adhesive to leave the floor surface substantially clean, or from the flooring adhesive to leave the latter substantially unimpaired.

An essential purpose of the mesh is to give a controlled adhesion between the flooring adhesive and the floorcovering. With certain floor surfaces, being those which are inherently absorbent, such as concrete and sand/cement screed, it is virtually impossible, at least cleanly, to remove the flooring adhesive by any technique of peeling off the adhesive simply because the surface provides such a good mechanical key for the adhesive. This problem cannot be avoided by lessening the adhesive power of the flooring adhesive since it would not then with certainty firmly hold the floorcovering in place. In these instances, the intermediate layer must, therefore, have an adhesion for the floor adhesive which is sufficiently strong to hold the floorcovering in place but not so strong as to prevent the intermediate layer from cleanly peeling off from the flooring adhesive. However, in other instances, that is, with smooth non-absorbent surfaces such as vinyl sheet and tiles, it is feasible to peel off the flooring adhesive and in this case the intermediate layer must provide an adhesion to the flooring adhesive sufficient to enable it to be peeled off with the intermediate layer.

The intermediate layer modifies the bond that would otherwise exist between the flooring adhesive and the floorcovering, in that, in the mesh, it provides a material which can be made strong enough to withstand the stress of the peeling off action without damage to the mesh and which, in the relevant instance, can provide a sufficiently strong adhesion to the flooring adhesive to permit the flooring adhesive to be removed with the mesh. For any given material of which the mesh is made and for any given flooring adhesive, the greater the size of the mesh the greater is the strength of the adhesion of the mesh as a whole to the flooring adhesive and, conversely, the lesser the mesh size, the lesser the strength of the adhesion to the flooring adhesive. The mesh size therefore is a factor determining the strength of the adhesive bond formed between the mesh and the flooring adhesive.

Thus, by suitable choice of mesh size, for any given flooring adhesive and material of which the mesh is made, the intermediate layer is rendered capable of peeling cleanly from the flooring adhesive or of cleanly peeling off the flooring adhesive from the floor surface as the case may be. Since usually a different flooring adhesive will be employed for absorbent floors than will be for floor surfaces which are otherwise, it is practicable to use the same mesh size for the different kinds of floor surface.

The continuous surface layer acts as a barrier to prevent the flooring adhesive penetrating through the intermediate layer and making contact with the floorcovering since the mesh alone may not be able to prevent this, particularly when the flooring adhesive is applied to the floor with a conventional V-notched flooring trowel i. e. the flooring adhesive before drying may fill, at least to some extent, the interstitial spaces of the mesh. However, this does not substantially alter the character of the bond between the intermediate layer and the flooring adhesive and does not interfere with the function of the mesh. The continuous surface layer, in practice, will be coated on the entirety of its underside with adhesive for the purpose of adhering the mesh to it ; and, in the instance, where the continuous surface layer is paper, this reduces the affinity of the continuous surface layer for a flooring adhesive.

Since the continuous surface layer is such as to prevent penetration by the flooring adhesive, it will also prevent penetration by the adhesive used to adhere the floorcovering to it.

The present invention may employ flooring adhesives conventionally used for bonding a floorcovering to an absorbent floor although it is preferred to use the proprietary adhesive available under the trade name « Styccobond » F52 produced by F. Ball & Co. Limited of 632/640, Garratt Lane, London, SW17ONT ; this adhesive being a resin-alcohol adhesive. The same adhesives may also be used on non-absorbent floor surfaces but it is preferred in the present invention for such non-absorbent floor surfaces to use another of the « Styccobond » adhesives namely, F37 adhesive ; this adhesive being a water based rubber emulsion adhesive. As indicated above, by the use of different flooring adhesives for the different kinds of floor surfaces, it is practicable to use the same mesh size in the intermediate layer.

The adhesive employed for the purpose of adhering the mesh to the continuous surface layer may be a conventional one and it does not necessarily have to provide a greater adhesion between the mesh and the continuous surface layer than the mesh has for the floor adhesive.

Suitable materials for the mesh are polyethylene, polypropylene (which is the preferred material), terylene*, polyester and nylon. These materials have a low absorbency for adhesives. It may also be mentioned that the mesh should be as dimensionally stable as the floorcovering although no difficulty arises on this ground with the above specified materials.

It will be appreciated that in all instances, regardless of what arrangement is used, the adhesion of the intermediate layer to the floorcovering and to the flooring adhesive must be sufficient to hold the floorcovering firmly in place.

A particularly suitable material for the continuous surfaced layer is a smooth Kfraft paper. The *Terylene is a Trade Mark.

weight of the paper is not an important factor, but it should be thick enough to prevent penetration of adhesive therethrough as explained above.

In the event that the floorcovering has got to be laid on a floor surface which has previously been treated by a sealant, surface hardener or primer, care should be taken to see that the sealant, hardener or primer employed is not one which is incompatible with the floor adhesive it is proposed to use ; and it is axiomatic that the floor surface must be dry, clean and free from dust, grease, paint, polish, soap or any other contaminant which will prevent adhesion. Concrete and sand/cement screed must be fully cured and dry and laitence must be removed. Timber floors must be firmly secured, overlaid, if necessary, and the joints made flush.

The flooring adhesive employed for adhering the floorcovering to the upper surface of the intermediate layer may be a conventional one. The adhesive employed will vary with the particular floorcovering to be laid ; and the publication « Recommended Adhesives Guide for Floorcoverings » published by F. Ball & Co. Limited provides a comprehensive list of adhesives that may be used with different floorcoverings.

The present invention will now be further described by reference to an example of an intermediate layer for the use in bonding a floorcovering to a floor surface.

In the example, the intermediate layer comprises a sheet of paper and adhered to one side thereof a mesh. The sheet of paper consists of smooth Kraft paper sufficiently thick to prevent adhesive penetration as explained above, and the mesh is formed of polypropylene and is woven to give a mesh of « 24 × 24 Leno weave » (24 double threads per 10 centimeters). The mesh is adhered to the paper by an adhesive which is coated over the entirety of the respective side of the sheet of paper. Conventional adhesives may be used for the purpose of adhering the mesh to the paper with sufficient strength to meet the criterion given above, that is, so that the intermediate layer when adhered to the flooring adhesive and to the floorcovering will hold the floorcovering firmly in place. Suitable adhesives are : acrylic, hot melt and modified poly vinyl Acetate. For adhering the intermediate layer of the example to concrete, sand/cement screed, asphalt, or a smooth underlay of chipboard, hardboard, plywood and magnesite, a resin-alcohol adhesive such as « Styccobond » F52 may be employed. For applying the intermediate layer of the example to terrazzo, steel, quarry tile, thermoplastic tile, vinyl sheet or tile, linoleum, polyester and epoxy resins, polyurethane or marble floor surfaces, a water based rubber emulsion adhesive such as « Styccobond » F37 may be used. This adhesive may also be used on asphalt floors.

Once the intermediate layer is bonded to the floor surface, the floorcovering is then bonded to the upper surface of the continuous surface layer using an adhesive suitable for the floorcovering concerned.

**Claims**

1. A method of bonding a floorcovering to a floor surface, comprising applying the floorcovering with an adhesive, applying to the floor surface on which a flooring adhesive has been laid, an intermediate layer characterised in that the intermediate layer is in the form of a flexible laminate comprising a flexible continuous surface layer and a flexible mesh to which the flexible continuous surface layer is adhered, with the mesh of the intermediate layer being applied to the flooring adhesive to leave the continuous surface layer uppermost, so that the floorcovering may then be adhered to the upper surface thereof, the continuous surface layer being such as to be able to prevent penetration of the flooring adhesive through the intermediate layer and the mesh being such as to provide a physical strength and an adhesion to the flooring adhesive to permit under force after the floorcovering has been laid either the mesh to be cleanly peeled off from the flooring adhesive or the mesh to peel off the flooring adhesive cleanly from the floor surface.

2. A method according to claim 1, characterised in that the continuous surface layer consists of paper.

3. A method according to claim 1, characterised in that the mesh consists of a thermoplastic material.

4. A method according to claim 3, characterised in that the thermoplastic material is polyethylene, polypropylene, polyester or nylon.

5. A method according to claim 1, characterised in that the mesh is a woven one.

6. A method according to claim 5, characterised in that the mesh is woven to give a mesh of 24 × 24 Leno weave (24 double threads per 10 centimeters).

7. A method according to claim 1, characterised in that the continuous surface layer is coated with adhesive on the entirety of its underside for the purpose of adhering the mesh thereto.

**Ansprüche**

1. Verfahren zum Aufkleben eines Bodenbelages auf eine Bodenfläche, umfassend das Auftragen eines Klebers auf einen Bodenbelag und das Anbringen einer Zwischenlage auf der Bodenfläche, auf welche ein Bodenbelagkleber aufgebracht wurde, dadurch gekennzeichnet, daß die Zwischenlage die Form eines flexiblen Laminates hat, welches eine flexible ununterbrochene Deckschicht und ein flexibles Gitter umfaßt, an welchem die flexible ununterbrochene Deckschicht haftet, wobei das Laminat mittels des Gitters mit dem Bodenbelagkleber so verbindbar ist, daß die ununterbrochene Deckschicht oben liegt, so daß dann der Bodenbelag an der oberen Oberfläche der ununterbrochenen Deckschicht befestigt werden kann, wobei die ununterbrochene Deckschicht eine solche ist, die ein Durchdringen des Bodenbelagklebers durch die Zwischenlage verhindert, und wobei das Gitter eine physikalische Festigkeit hat und eine Haftung am Bodenbelagkleber ergibt, die es erlauben, daß, nach dem Verlegen des Bodenbelages, unter Krafteinwirkung es möglich ist, daß entweder das Gitter säuberlich vom Bodenbelagkleber abgezogen wird oder das Gitter den Bodenbelagkleber säuberlich von der Bodenoberfläche abzieht.

2. Verfahren nach Anspruch 1, dadurch gekennzeichnet, daß die ununterbrochene Deckschicht aus Papier besteht.

3. Verfahren nach Anspruch 1, dadurch gekennzeichnet, daß das Gitter aus thermoplastischem Material besteht.

4. Verfahren nach Anspruch 3, dadurch gekennzeichnet, daß das thermoplastische Material Polyäthylen, Polypropylen, Polyester oder Nylon ist.

5. Verfahren nach Anspruch 1, dadurch gekennzeichnet, daß das Gitter gewoben ist.

6. Verfahren nach Anspruch 5, dadurch gekennzeichnet, daß das Gitter mit 24 × 24 Dreherbindung (24 Doppelfäden pro 10 cm) gewoben ist.

7. Verfahren nach Anspruch 1, dadurch gekennzeichnet, daß die ununterbrochene Deckschicht, zum Zwecke des Haftens am Gitter, auf ihrer gesamten Unterseite mit Kleber überzogen ist.

**Revendications**

1. Procédé pour fixer un revêtement de sol sur une surface de plancher selon lequel on enduit le revêtement de sol d'une colle et on applique une couche intermédiaire sur la surface du plancher que l'on a enduite d'une colle de fixation au plancher, caractérisé par le fait que la couche intermédiaire se présente sous la forme d'un stratifié souple comportant une couche surfacique continue souple et un réseau souple auquel adhère la couche surfacique continue souple, le réseau de la couche intermédiaire étant appliqué sur la colle de fixation au plancher pour laisser sur le dessus la couche surfacique continue, de telle sorte que le revêtement de sol peut alors être collé sur sa surface supérieure, la couche surfacique continue étant capable d'empêcher la pénétration de la colle de fixation au plancher à travers la couche intermédiaire et le réseau présentant une résistance physique et une adhérence à la colle de fixation au plancher permettant, après que le revêtement de sol a été posé, soit arracher de force proprement le réseau de la colle de fixation au plancher, soit au réseau d'arracher proprement la colle de la surface du plancher.

2. Procédé selon la revendication 1, caractérisé en ce que la couche surfacique continue est du papier.

3. Procédé selon la revendication 1, caractérisé en ce que le réseau est en matière thermoplastique.

4. Procédé selon la revendication 3, caractérisé en ce que la matière thermoplastique est du polyéthylène, du polypropylène, du polyester ou du nylon.

5. Procédé selon la revendication 1, caractérisé en ce que le réseau est tissé.

6. Procédé selon la revendication 5, caractérisé en ce que le réseau est tissé selon une armure Leno 24 × 24 (24 doubles fils par 10 cm).

7. Procédé selon la revendication 1, caractérisé en ce que la couche surfacique continue est enduite d'une colle sur la totalité de sa face inférieure pour y faire adhérer le réseau.